**Europäisches Patentamt**

**European Patent Office**

**Office européen des brevets**

(19)

(11) Veröffentlichungsnummer: **0 438 838 A2**

# (12) EUROPÄISCHE PATENTANMELDUNG

(21) Anmeldenummer: **90250331.7**

(22) Anmeldetag: **21.12.90**

(51) Int. Cl.5: **C04B 7/21**, C04B 5/02, C21B 3/08

(30) Priorität: **22.12.89 DE 3943228**

(43) Veröffentlichungstag der Anmeldung:
**31.07.91 Patentblatt 91/31**

(84) Benannte Vertragsstaaten:
**AT DE ES GB IT LU NL**

(71) Anmelder: **Stahlwerke Peine-Salzgitter AG**
**Gerhardstrasse 10**
**W-3150 Peine(DE)**

(72) Erfinder: **Berner, Klaus, Dr.-Ing.**
**Marcweg 11**
**W-3320 Salzgitter 1(DE)**
Erfinder: **Klaus, Gerhard, Dr. rer. nat.**
**Von-Eichendorff-Strasse 22**
**W-3362 Bad-Grund(DE)**
Erfinder: **Köhlau, Horst-Dieter, Dipl.-Ing.**
**Klappe 1a**
**W-3384 Liebenburg 1(DE)**

(74) Vertreter: **Kaiser, Henning**
**c/o Preussag AG, Patente und Lizenzen,**
**Postfach 15 12 27 Kurfürstendamm 32**
**W-1000 Berlin 15(DE)**

(54) **Verfahren zur Herstellung eines Zementes und eines Granulates aus Blasstahlschlacke sowie eine Granuliervorrichtung.**

(57) Es wurde gefunden, daß ein einem Erzzement analoger Zement aus Blasstahlschlacke mit einer Basizität von etwa drei durch gemeinsames Mahlen mit zugesetztem Anhydrit II und unter Zugabe von Sulfit-Ablauge hergestellt werden kann, wobei durch plötzliches schockartiges Abkühlen der Schlacke ein Granulat erzeugt werden kann, das einen hohen Anteil amorpher Substanz, vorzugsweise über 95 Gew.% enthält. Die Schlacke wird in einem Schlackenstrom 6 aus einem Zwischengefäß 2 auf einen rotierenden Kegel 3, der mit Wasser beispielsweise aus Düsen 9 gekühlt ist, zugeleitet und am Auftreffpunkt durch einen Hochdruckwasserstrahl 8 aus einer Düse 7 zerteilt. Vorzugsweise ist der Hochdruckwasserstrahl 8 horizontal, aber tangential an den Kegelmantel 3 gerichtet. Wasser und Granalien werden in einem Raum 10 gesammelt, durch eine Förderschnecke 11 ausgetragen und aus einem Absetzbecken 12 über ein Förderband 13 entnommen.

## VERFAHREN ZUR HERSTELLUNG EINES ZEMENTES UND EINES GRANULATES AUS BLASSTAHLSCHLAK-KE SOWIE EINER GRANULIERVORRICHTUNG

Die Erfindung betrifft ein Verfahren zur Herstellung eines Zementes sowie eines Granulates aus Blasstahlschlacke für einen Zement, der einem Erzzement analog ist. Die Erfindung bezieht sich auch auf die Vorrichtung zur Durchführung dieses Granulat-Gewinnungs-Verfahrens.

Von der Herstellung von Erzzement, der in verschiedener Hinsicht vorteilhaft ist und eine hohe Frostbeständigkeit aufweist, wird meist abgesehen, da die Herstellungskosten sehr hoch sind. Es ist bekannt, Schlacken aus der Eisenherstellung beispielsweise Hüttenschlacken zu granulieren und für die Herstellung von Hüttenzement zu vermahlen. Diese Schlacken sind jedoch dem Erzzement nicht gleichwertig und weisen eine andere chemische Zusammensetzung auf. Der zur Anwendung kommende Hüttenzement weist einen Zusatz von beispielsweise 20 % Portlandzement auf.

Der vorliegenden Erfindung liegt das Problem zugrunde, die Gewinnung eines Zementes aus einer aufbereiteten Schlacke vorzugsweise in Form von Granalien, der einem Erzzement gleichwertig ist, und durch den eine qualitativ vollwertige oder sogar vorteilhaftere Substitution von Portlandzement zu ermöglichen.

Wie Analysenvergleiche ergaben, stimmt die Zusammensetzung von Blasstahlschlacken insbesondere Konverter-Endschlacke, nach Ausscheiden eines wesentlichen Eisenanteiles, mit derjenigen eines Erzzementklinkers weitgehend überein.

Derartige Blasstahlschlacken sind z. B. in den DE-C2-34 30 630 und 32 16 772 angegeben, wobei heute die Tentenz in Richtung auf geringere MnO-Anteile geht. Die Basizität (Verhältnis %CaO/%SiO$_2$) beträgt etwa 3 bis 3,5. Demgegenüber haben Hochofenschlacken nur eine Basizität von etwa 1, mit SiO$_2$ und CaO-Werten von etwa 30 bis 40%. Eine typische Hochofenschlacke enthält darüberhinaus etwa 0,5% Fe, 0,5% MnO, 0,1% P$_2$O$_5$, 10% Al$_2$O$_3$ und 10% MgO.

Bei Labor- und Technikumsversuchen zeigte es sich überraschend, daß es möglich ist, aus Blasstahlschlacke einen Stoff zu schaffen, aus dem in Analogie zum Erzzementklinker bei Vermahlung unter Zusatz von Gipsstein oder Anhydrit II (CaSO$_4$ II) ein Zement resultiert, der

- bei entsprechend gesteuerter Abkühlung und
- bei entsprechender Aufmahlung des Schlacken/CaSO$_4$-Gemisches

bei seiner Verarbeitung eine höhere mechanische Festigkeit (Druckfestigkeit, Biegefestigkeit, Zugfestigkeit) und qualitativ bessere Eigenschaften (Frostbeständigkeit) aufweist als Portlandzement. Für eine gute Raumbeständigkeit des Zementes sollte der MgO-Anteil unter 8% in der Blasstahlschlacke liegen.

Nach Technikumsversuchen ergab sich, daß zur Lösung des Problemes ein Granulat mit höchsten Anteilen amorpher Substanz durch schockartige Abschreckung der flüssigen Schlacke erhalten werden kann, wenn ein Schlackenstrom gegen eine zur Richtung des Stromes geneigte, gekühlte und gewölbte Fläche gelenkt wird und gleichzeitig ein Hochdruckwasserstrahl auf den Auftreffpunkt oder Auftreffbereich des Schlackenstroms gerichtet wird, der die entstehenden Granalien zerreißt und sie mit Wasser und Wasserdampf umhüllt und hierdurch die wesentliche anfängliche schockartige Abkühlung bewirkt.

Aus der DE-AS-10 08 997 ist ein kegelliger Drehteller bekannt, der wassergekühlt, zur Herstellung von Granulaten aus schmelzflüssigen Stoffen, z. B. Roheisen dient. Die Wasserkühlung soll jedoch nur ein Anbacken des Eisengranulates verhindern und mit geringer laminarer Strömung erfolgen. Das Problem der beim Granulieren von Blasstahlschlacken anfallenden Schlackenwolle wurde nicht beachtet.

Weiterhin ist gemäß der DE-AS-10 66 124 vorgeschlagen worden, zur Erzeugung glasiger Granulate, die nicht auskristallisieren, die Oberfläche eines Hochofenschlacke-Strahles während einer Luftfallstrecke mit nadeldünnen Wasserstrahlen hohen Druckes abzuschrecken, wobei sämtliches Wasser verdampfen soll. Die Praxis hat gezeigt, daß die Abschreck- und Granulierenergien nicht ausreichen, um sowohl ein feinkörniges Granulat als auch einen sehr hohen Anteil amorpher Substanz zu erhalten, zumal die Granulat-Innentemperaturen noch weit oberhalb 400° C liegen.

Gemäß der Erfindung fließt daher der Schlackenstrom auf einen rotierenden Kegel und wird im Augenblick des Auftreffens durch den Hochdruckwasserstrahl in derart kleine Granalien zerrissen, daß durch das überschüssige Wasser aus dem Wasserstrahl eine extrem schnelle Abkühlung erfolgen kann. In weiterer Ausgestaltung der Erfindung werden die Granalien sofort nach ihrer Ausbildung in ein gekühltes Wasserbett oder ein Eiswasserbett eingetragen. Vorzugsweise wird der als gekühlte, gewölbte Fläche verwendete Kegel mit einem zweiten zweckmäßigerweise von oben kommenden Wasserstrahl beaufschlagt, dessen Auftreffpunkt vor dem Auftreffpunkt des Schlackenstromes liegt, so daß dieser auf eine mit Wasser benetzte und gekühlte Fläche auftrifft.

Infolge der erfindungsgemäßen schnellen Abkühlung der die Granalien bildenden Partikel enthalten diese amorphe Substanzen zu über 95 Gew.% und nur einen sehr geringen Anteil an kristallinen Substanzen.

Ein Ausführungsbeispiel zeigt die erfindungsgemäße Herstellung des Zementes. In einer Einrichtung der beschriebenen Art wurde Blasstahlschlacke der eingangs erwähnten Art durch die erfindungsgemäße schnelle Abkühlung aufbereitet, so daß hierdurch der mittels Röntgendiagramm nachweisbare Gewichtsanteil an kristalliner Substanz kleiner als 2 Gew.% betrug. Die Granalien wurden zunächst einem Magnetabscheider zur Entfernung der eisenhaltigen Granalien zugeführt und der Rest gemeinsam mit 5 Gew.% Anhydrit II vermahlen auf 4300 cm²/g Blaine.

Unter Verwendung von 0,1% Sulfit-Ablauge zur Erstarrungsverzögerung und bei Beachtung eines geringen Wasser-Zement-Wertes von 0,2 zur Erzielung hoher Festigkeit erwies sich die Einstellung der optimalen Mahlfeinheit von feiner 3.500 cm²/g Blaine als entscheidende Steuergröße für die Konsistenz des erzeugten Zementes. Die Erstarrungszeit betrug bei geringfügiger Variation der Menge an Sulfit-Ablauge (unter 1%) etwa ein bis zwei Stunden.

Die Druckfestigkeit des so gewonnenen Zementes ergab sich mit 34 N/mm² nach 7 Tagen und 55 N/mm² nach 28 Tagen.

Ein bevorzugtes Ausführungsbeispiel zur Herstellung des verwendeten Granulates aus Blasstahlschlacke ist auf der beigefügten schematischen Zeichnung dargestellt.

Die Blasstahlschlacke wird aus der Schlackenpfanne 1 über ein Zwischengefäß 2, das für einen gleichmäßigen Strom sorgt, auf einen mit Wasser gekühlten Rotationskegel 3 gegeben, der auf einem durchlässigen Haltekreuz 4 in einem Gehäuse 5 gelagert ist. Der vertikal von oben auf den Kegel 3 auftreffende Schlackenstrahl 6 wird durch einen aus einer Wasserdüse 7 austretenden Hochdruckwasserstrahl 8 in kleine Partikel zerrissen. Andere Wasserdüsen 9 sind zweckmäßigerweise oberhalb des Kegels 3 angeordnet und dienen der Benetzung des Kegelmantels und seiner Kühlung. Wasser und granulierte Schlackenpartikel sammeln sich in einem Raum 10 unterhalb des Kegels 3, wo die Granalien weiter gekühlt werden. In dem Raum 10 ist einem Austragseinrichtung vorzugsweise eine Förderschnecke 11 angeordnet, die das Granulat austrägt und die Bildung von Brücken aus Granulat in den Raum 10 verhindert. Die Schlackenpartikel gelangen dann in ein weiteres Kühlbad 12, wo sie sich absetzen und durch ein geeignetes Fördermittel beispielsweise ein Förderband 13 ausgetragen werden. An dem Förderband 13 ist zweckmäßigerweise ein Magnetabscheider 14 angeordnet, durch den eine Abtrennung von Eisengranalien erfolgt. Die Schlackenpartikel werden beispielsweise in einen Wagen 15 abgegeben und zur weiteren Aufbereitung gebracht, die in an sich bekannter Weise erfolgt.

Der Winkel der Mantelfläche zur Achse des Kegels 3 beträgt vorzugsweise etwa 45°. Der Antrieb zur Rotation des Kegels ist nicht dargestellt.

Die in vereinfachter Weise dargestellte Vorrichtung kann in verschiedener Hinsicht abgewandelt werden. So kann beispielsweise der rotierende Kegel 3 zusätzlich mit einer inneren Kühlung versehen sein. An dem Raum 10 kann ein Überlauf für Wasser vorgesehen werden, um zu verhindern, daß der Wasserspiegel wesentlich bis über das Haltekreuz 4 ansteigt. Ferner ist es möglich, eine zusätzliche Kühlung für den Raum 10 vorzusehen oder den Raum 10 in anderer Weise mit dem Absetzbecken 12 zu verbinden oder zu vereinigen.

Soweit gleichzeitig Schlackenwolle anfällt, kann sie entweder als solche verwendet und abgetrennt oder nach entsprechender Zerkleinerung ebenfalls zu Zement verarbeitet werden. Der Anfall von Schlackenwolle kann in an sich bekannter Weise dadurch gefördert werden, daß bei Einsatz stärker dünnflüssiger Schlacke ein höherer Prozentsatz an Wolle gewonnen wird, was durch entsprechende Temperaturerhöhung der Schlacke und/oder schmelzfördernde Additive erzielt werden kann. Eine weitere Beeinflussung des Anteils von Granalien- und Wolle-Anfall ist durch die Wahl der Temperatur des zur Abkühlung der Schlacke eingesetzten Wassers gegeben. Ist aus wirtschaftlichen Gründen der zeitweise Einsatz des Verfahrens zur bevorzugten Schlackenwolle-Erzeugung gewünscht, wird das zur Abkühlung erforderliche Wasser als Warmwasser eingesetzt beziehungsweise noch besser - zumindest teilweise - durch Dampf ersetzt.

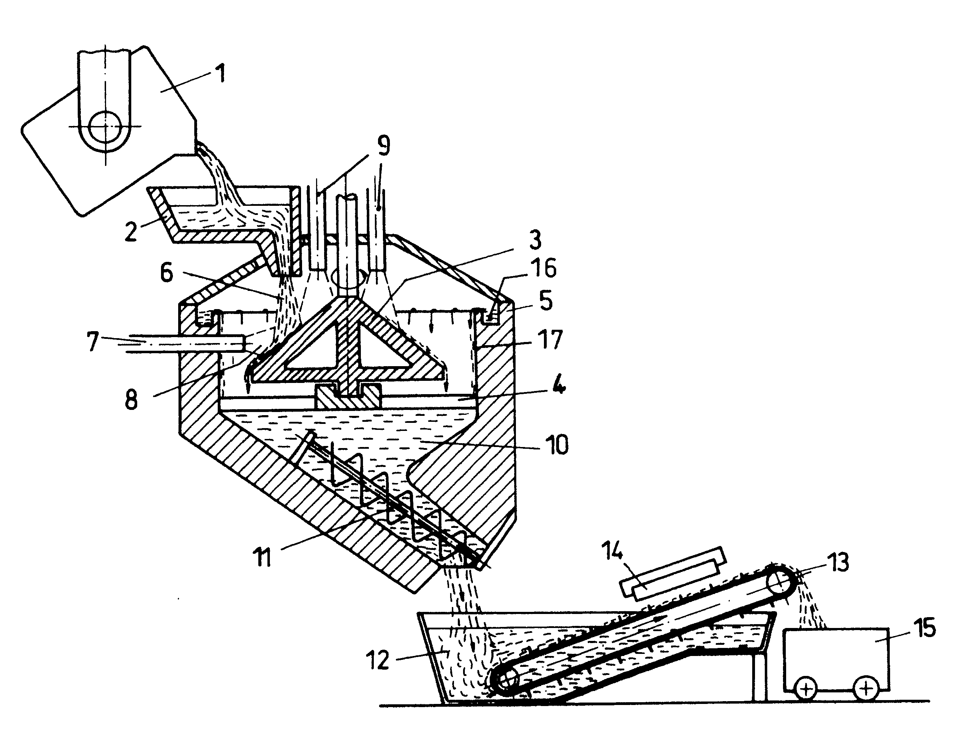

Zur Reduzierung des für die Zementherstellung nicht notwendigen Anteils der Schlackenwolle ist es vorteilhaft die Temperatur des eingesetzten Wasser und der Oberfläche des rotierenden Kegels 3 möglichst niedrig zu halten. Hierzu ist es weiter vorteilhaft, die Richtung des auf den Rotationskegel auftretenden Hochdruckwasserstrahls so zu wählen, daß er entgegen der Rotationsrichtung des Kegels tangential an den Auftreffpunkt erfolgt. Im Hinblick auf die beigefügte Zeichnung bedeutet dies, daß die Düse 7 für den Hochdruckwasserstrahl 8 senkrecht von oben auf die Zeichnungsebene wirkend anzuordnen ist.

Neben Blasstahlschlacke fallen in einem Hüttenwerk erhebliche Mengen Hochofenschlacke an. Die sowohl ökonomisch als auch gleichzeitig ökologisch beste und somit volkswirtschaftlich sinnvollste Verwendung besteht in der Verarbeitung der Hochofenschlacke zu Hüttenzement. Hüttenzement wird hergestellt, z. B. durch Vermahlung und Mischung von Hochofenschlacken-Granulat mit Portlandzement. Als weiterer Zuschlagsstoff wird z. B. Anhydrit II eingesetzt.

Der aus Blasstahlschlacken-Granalien hergestellte Zement hat sich auch als sehr gut geeigneter Anreger für feingemahlenen Schlackensand aus Hochofenschlacke erwiesen.

Durch die Anwendung der erfindungsgemäß hergestellten Granalien aus Blasstahlschlacke mit einem hohen Anteil an Eisenoxid und einem durch die schnelle Abkühlung hervorgerufenen hohen Anteil amorpher Substanzen bei möglichst geringem Anteil an kristallinen Substanzen ist die Erzielung volkswirtschaftlichen Nutzens möglich:

- die Substitution von Portlandzement bei der Herstellung von Hüttenzement und somit eine weitestgehende Verwertung der Hochofenschlacke
- bei allgemeiner Substitution von Portlandzement in erheblichem Umfang Energieeinsparung, Vermeidung von Umweltschäden und Schonung von Landschaftsgebieten und Rohstoffquellen.

**Patentansprüche**

1. Verfahren zur Herstellung eines Zementes aus granulierter, bei der Eisenherstellung anfallender, Schlacke, gekennzeichnet durch folgende Verfahrensschritte:
   - Blasstahlschlacke mit einer Basizität von etwa drei wird sehr feinkörnig mit einem Anteil an amorpher Substanz von mehr als 90% granuliert,
   - gegebenenfalls wird Eisengranulat aussortiert,
   - unter Zugabe von 1 bis 10% Anhydrit II wird die Blasstahlschlacke mit einer Mahlfeinheit von feiner 3.500 cm$^2$/g Blaine vermahlen,
   - anschließend wird weniger als 1% Sulfit-Ablauge zugemischt und
   - das erhaltene Produkt getrocknet.

2. Verfahren nach Anspruch 1, gekennzeichnet durch eine Zugabe von vorzugsweise etwa 5% Anhydrit II.

3. Verfahren nach Anspruch 1, dadurch gekennzeichnet, daß die Mahlfeinheit vorzugsweise etwa 4.300 cm$^2$/g Blaine beträgt.

4. Verfahren zur Herstellung eines feinkörnigen Granulates aus Blasstahlschlacke für Zement, der Erzzement analog ist, durch schockartiges Abschrecken von flüssiger Blasstahlschlacke mittels Wassers, das mehr als 90% amorphe Substanz enthält, indem ein Schlackenstrom gegen eine zur Richtung des Stromes geneigte, mit Wasser benetzte, gewölbte Fläche auftrifft und gleichzeitig ein ebenfalls zur der Fläche geneigter Hochdruckwasserstrahl auf den Auftreffpunkt des Schlackenstromes gerichtet wird, der Granalien zerreißt, abkühlt und sie mit Wasser und Wasserdampf umhüllt.

5. Verfahren nach Anspruch 4, dadurch gekennzeichnet, daß die Granalien sofort nach ihrer Ausbildung in ein gekühltes Wasserbett bzw. Eiswasserbett eingetragen werden.

6. Verfahren nach Anspruch 4 oder 5, dadurch gekennzeichnet, daß die gewölbte Fläche mit wenigstens einem zweiten Wasserstrahl beaufschlagt wird, dessen Auftreffpunkt in Bewegungsrichtung der Fläche vor dem Auftreffpunkt des Schlackenstrahles liegt.

7. Verfahren nach einem der Ansprüche 4 bis 6, dadurch gekennzeichnet, daß der Auftreffwinkel und des Wasserstrahles auf die bewegte Fläche einstellbar ist.

8. Vorrichtung zur Durchführung des Verfahrens nach einem oder mehreren der Ansprüche 4 bis 7, gekennzeichnet durch einen wassergekühlten, um eine vertikale Achse rotierenden Kegel (3) und eine Zuführung für den Schlackenstrom aus einem Zwischengefäß (2) von oben auf die Mantelfläche des Kegels (3) sowie mindestens eine Düse (7) zur Erzeugung eines Hochdruckwasserstrahls (8) der etwa auf den Auftreffpunkt des Schlackenstromes (6) auf den Kegel (3) gerichtet ist, wobei der Kegel (3) von einem Gehäuse (5) umgeben ist, das unterhalb des Kegels (3) einen Raum (10) zum Sammeln von Wasser und Schlackengranulat enthält.

9. Vorrichtung nach Anspruch 8, dadurch gekennzeichnet, daß in dem Raum (10) eine Austragseinrichtung, vorzugsweise eine Förderschnecke (11) zum Austragen des Granulates angeordnet ist.

10. Vorrichtung nach Anspruch 8 oder 9, dadurch gekennzeichnet, daß unterhalb des Raumes 10 ein Kühlwasser- und Absetzbecken (12) angeordnet ist, das einen Austragförderer (13) mit einem Magnetabscheider (14) aufweist.

11. Vorrichtung nach Anspruch 8, dadurch gekennzeichnet, daß die Düse (7) horizontal und auf den Mantel des Kegels (3) etwa tangential gerichtet in dem Gehäuse (5) angeordnet ist.

12. Vorrichtung nach Anmspruch 8, gekennzeichnet durch eine Benetzungseinrichtung (16) für wenigstens einen Teil der inneren Oberfläche (17) des Gehäuses (5).